# EUROPÄISCHE PATENTSCHRIFT

(11) **EP 0 448 908 B1**
(45) Veröffentlichungstag und Bekanntmachung des Hinweises auf die Patenterteilung: **14.12.1994**
(21) Anmeldenummer: 90810245.2
(22) Anmeldetag: 27.03.1990
(51) Int. Cl.: H02M 3/156

(54) **Verfahren zur Erzeugung einer stabilen Gleichspannung und stabile Gleichspannungsquelle**
Method for generating a stable DC voltage and stabilized DC voltage source
Méthode pour générer une tension continue stabilisée et source de tension continue stabilisée

(43) Veröffentlichungstag der Anmeldung: 02.10.1991
(73) Patentinhaber: SAIA AG, CH-3280 Murten (CH)
(72) Erfinder: Bourqui, Bernard, CH-1784 Courtepin (CH); Gauthier, Pierre, CH-1787 Mur (CH)
(74) Vertreter: Steiner, Martin

(56) Entgegenhaltungen:
- GB-A- 2 117 143
- US-A- 4 752 866
- US-A- 4 791 350

## Beschreibung

Stabile Gleichspannungen werden zum Betrieb verschiedenster Schaltungen und Geräte benötigt. Die Stabilisierung der Ausgangspannung erfolgt in den meisten Fällen elektronisch durch eine sogenannte Längsregelung, Querregelung oder eine Kombination beider Verfahren, wobei in allen Fällen bei der Regelung erhebliche Verlustleistungen auftreten.

Aus der EP-A-0 129 181 ist es auch bekannt, eine Induktivität und einen Schalttransistor in Serie zu schalten, und den Schalttransistor so zu steuern, dass die über eine Diode abgeleiteten, beim Oeffnen des Schalttransistors jeweils an der Induktivität auftretenden Spitzenspannungen zu einer konstanten Gleichspannung am Ausgang führen. Auch in diesem Falle ist das Verhältnis zwischen nutzbarer Energie und zugeführter Energie verhältnismässig ungünstig.

Ziel vorliegender Erfindung ist es, ein Verfahren und eine Schaltung anzugeben, welche eine geringe Verlustleistung und entsprechend kleines Volumen bezogen auf die Leistung, sehr kurze Ausgleichsvorgänge bei Ein- und Ausschaltung beziehungsweise eine entsprechend kurze Wiederbereitschaftszeit, einen günstigen Preis, sowie einen sehr weiten Bereich von Speisespannungen ermöglichen. Dieses Ziel wird gemäss dem Anspruch 1, beziehungsweise 3, erreicht. Damit lassen sich, wie noch erläutert wird, die erwähnten Vorteile erzielen. Vorzugsweise wird der Gleichstrom mittels eines Schalters, insbesondere Schalttransistors, ein- und ausgeschaltet und in einem Kreis durch die Induktivität, eine Freilaufdiode und den Widerstand geführt. Es lässt sich damit unter günstigsten Bedingungen eine Gleichstrom-Gleichstromtransformation erzielen, indem der impulsweise durch den Schalter fliessende Gleichstrom nur einen Bruchteil des in der Induktivität, der Freilaufdiode und dem Widerstand fliessenden Gleichstroms zu betragen braucht.

Ein zusätzliches Ziel der Erfindung gemäß dem Anspruch 1, beziehungsweise 3, ist eine stabile Gleichspannung zu erzeugen. Dieser Widerstand ist als Zenerdiode oder Serieschaltung mehrerer Zenerdioden ausgebildet, womit unter besonders günstigen Bedingungen die Ausgangsspannung zusätzlich stabilisiert wird.

Die Erfindung wird nun anhand eines Ausführungsbeispiels näher erläutert.
- Fig. 1: zeigt das Schaltbild der erfindungsgemässen Gleichspannungsquelle und
- Fig. 2: ist ein Diagramm zur Erläuterung des Sromflusses in der Induktivität.

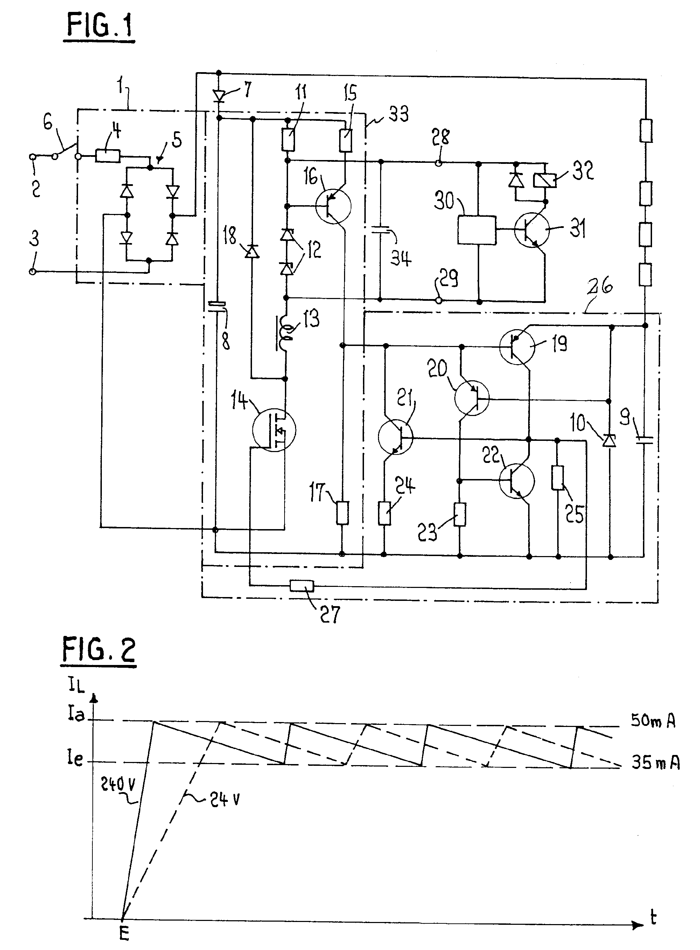

Die in Fig. 1 dargestellte Spannungsquelle weist einen Eingangsteil oder Netzteil 1 mit Anschlussklemmen 2 und 3, einen Schutzwiderstand 4 und eine Zweiweg-Gleichrichterbrücke 5 auf. Dieser Eingangsteil, insbesondere die Brücke 5, ist für Netz-Wechselspannung bemessen. Es ist daher möglich, die Spannungsquelle an beliebige geeignete Energiequellen, beispielsweise ans Wechselstromnetz oder an eine Gleichstrombatterie direkt anzuschliessen. Der Eingangsteil 1 weist einen Netzschalter 6 auf, mittels welchem die Spannungsquelle ein- und ausgeschaltet werden kann.

Der Ausgang des Gleichrichters 5 ist über eine Diode 7 mit einem Siebkondensator 8 verbunden. Ferner ist der Ausgang des Gleichrichters direkt über nicht bezeichnete Vorwiderstände mit einem Siebkondensator 9 verbunden.

Dieser Kondensator 9 zusammen mit einer Zenerdiode 10 dient der Speisung einer später beschriebenen Steuerschaltung.

Mit dem Kondensator 8 ist die Serieschaltung eines Widerstandes 11, Zenerdioden 12, einer Induktivität 13 und eines Schaltstransistors 14 verbunden. Parallel zu diesem Zweig liegt ein weiterer Zweig mit einem Widerstand 15, einem Transistor 16 und einem Widerstand 17. Der Widerstand 11, die Zenerdioden 12 und die Induktivität 13 werden durch eine Freilaufdiode 18 überbrückt. Der Schaltungsteil bestehend aus den Elementen 11 bis 18 kann als Energiespeichermodul 33 bezeichnet werden, obschon er auch andere Funktionen erfüllt, wie noch erläutert wird. Das gilt insbesondere für die Elemente 11, 15 und 16, die als Stromdiskriminator zur Erfassung des Stromes in der Induktivität 13 und zur entsprechenden Steuerung des Schaltstransistors 14 dienen. Der Strom im Transistor 16 erzeugt einen Spannungsabfall im Widerstand 17, welcher Transistoren 19 und 20 ansteuert. Der Kollektor des Transistors 19 ist mit der Basis eines Transistors 21 und dem Kollektor eines Transistors 22 verbunden. Den Transistoren 20 und 21 sind Widerstände 23 beziehungsweise 24, in Serie geschaltet, und dem Transistor 22 ist ein Widerstand 25 parallel geschaltet. Die Schaltung bestehend aus den Elementen 19 bis 25 hat die Funktion eines Impulsformers und Verstärkers 26, der über einen Widerstand 27 den Schalttransistor 14 ansteuert.

Der Ausgang der Gleichstromquelle mit den Klemmen 28 und 29 ist den beiden Zenerdioden 12 parallel geschaltet, das heisst, in den Zenerdioden 12 und der Last fliessen parallele Ströme, oder noch anders ausgedrückt nehmen die Zenerdioden 12 den Strom auf der von der Last nicht benötigt wird und wirken zugleich als Spannungsstabilisatoren. Dem Ausgang ist ein Kondensator 34 parallelgeschaltet.

In Fig. 1 ist ein Beispiel einer an die Ausgangsklemmen 28 und 29 angeschalteten Last dargestellt, nämlich ein elektronischer Zeitschalter 30 dessen Ausgang auf einen Transistor 31 wirkt, der mit der Wicklung 32 eines Relais in Serie geschaltet ist.

Die Arbeitsweise der dargestellten Schaltung ist wie folgt :

Beim Einschalten beziehungsweise Anschalten des Eingangsteils 1 wird der Kondensator 8 über den Widerstand 4 die Brücke 5 und die Diode 7 auf eine Betriebs-Gleichspannung aufgeladen, deren Spannung je nach Energiequelle stark varieren kann. Es kann sich dabei um eine Batteriespannung von beispielsweise 24 V handeln, oder aber um eine wesentlich höhere Spannung von rund 240 V, wenn die Anschaltung an das Wechselstromnetz erfolgt. In jedem Falle sorgt die Brücke 5 für eine Gleichrichtung beziehungsweise richtige Polung der Betriebsspannung. Zugleich wird der Kondensator 9 auf eine durch die Zenerdiode 10 bestimmte Spannung aufgeladen. Im Anfangszustand ist der Transistor 16 gesperrt, weil bei stromlosem Zustand an der Basis und am Emitter gleiche Spannung herrscht, der Transistor 19 ist leitend und der Schalttransistor 14 ist ebenfalls leitend. Durch den Widerstand 11, die Zenerdioden 12, die Induktivität 13 und den Schalttransitor 14 beginnt daher mit sehr steilem Einstieg ein Strom zu fliessen, was in Fig. 2 angedeutet ist. Mit ansteigendem Strom sinkt die Spannung an der Basis des Transistors 16 ab, so dass über dem Widerstand 17 beziehungsweise an der Basis des Transistors 19 und dem Emitter des Transistors 20 ein dem Stromanstieg etwa entsprechender Spannungsanstieg erfolgt, bis die Transistoren 20 und 22 leitend und die Transistoren 19 und 21 gesperrt werden, wobei ein sehr rasches Kippen der Schaltung erfolgt, das über den Widerstand 27 den Schalttransistor 14 sperrt. Dieser Vorgang ist in Fig. 2 angedeutet. Wenn der Ausschaltstrom Ia erreicht und der Schalttransistor 14 gesperrt wird, fliesst ein langsam sinkender Strom in gleicher Richtung weiterhin durch die Induktivität 13, die Diode 18, den Widerstand 11 und die Zenerdioden 12. Diesen Vorgang zeigt Fig. 2 durch den verhältnismässig langsamen Rückgang des Stromes bis zu einem unteren Einschaltwert Ie, bei welchem die Schaltung 19 bis 25 zurückkippt und damit auch der Transistor 14 wieder leitend wird. Hierbei wirkt die Transistorschaltung 19, 20 gewissermassen als Schmitt-Trigger, und der Transistor 21 wirkt nach dem Gleichtaktprinzip, um die dynamischen Anforderungen an die Impulsform und -Amplitude zu erzielen. Wie in Fig. 2 dargestellt, erfolgt eine periodische Umschaltung des Schalttransistors 14, wobei jeweils bei leitendem Transistor ein sehr schneller Stromanstieg in der Induktivität 13 und bei nichtleitendem Transistor 14 ein langsamer Rückgang des Stromes stattfindet. In Fig. 2 ist ferner angedeutet, dass der Stromanstieg bei hoher Betriebsspannung von beispielsweise 240 V steiler ist als im Falle einer Batteriespannung von 24 V. Bei hoher Betriebsspannung wird daher auch eine höhere Schaltfrequenz unter sonst gleichen Bedingungen erzielt als bei niedriger Betriebsspannung. Immerhin ist der Frequenzunterschied nicht dem Spannungsunterschied entsprechend, weil in jedem Falle die jeweilige Zeit des Stromanstiegs wesentlich kürzer ist als die Zeit des Stromabfalls. Bei einer Betriebsspannung von 240 V hat beispielsweise der jeweilige Stromanstieg eine Dauer von 1µs , während die Dauer des Stromabfalls 30µs beträgt. Die Schaltfrequenz liegt unter diesen Umständen im Bereiche von 25 bis 30 kHz.

Beim angenommenen Beispiel kann der Ausschaltstrom Ia=50 mA und der Einschaltstrom Ie=35 mA betragen. Der Leistungsbereich der Schaltung und damit auch die Werte für den Bereich der Schaltfrequenzen und der Einschalt- und Ausschaltströme können in weiten Grenzen varieren.

Wie bereits erwähnt, kann der im geschlossenen Kreis mit den Elementen 11, 12, 13 und 18 fliessende Strom ein Mehrfaches betragen des mittleren Stromes im Schalttransistor 14. Es ist daher auch für die Wirtschaftlichkeit der Schaltung von sekundärer Bedeutung, dass in den Zenerdioden 12 unter Umständen ein erheblicher Strom parallel zur angeschlossenen Last fliesst. Bei einer konstanten Last können aber natürlich die Verhältnisse so gewählt werden, dass der Verluststrom in den Zenerdioden 12 verhältnismässig gering ist. Im Falle einer variablen Last nehmen zwar die Zenerdioden 12 den überschüssigen Strom auf, aber die Schaltung arbeitet aus den soeben erwähnten Gründen trotzdem sehr wirtschaftlich.

Bei dem in Fig. 1 angenommenen Beispiel einer Last wird beim Einschalten des Schalters 6 der Zeitgeber 30 mit Strom versorgt und beginnt eine bestimmte Zeit auszuzählen. Beim Erreichen der auszuzählenden Zeit wird der Transistor 31 leitend und das Relais 32 erregt, womit ein bestimmter Schaltvorgang gesteuert wird.

Wie oben erwähnt zeichnet sich die dargestellte Schaltung durch sehr kurze Ansprechzeiten beim Einschalten und Ausschalten aus. Das bedingt allerdings, dass beim Ausschalten alle wesentlichen Stromkreise, insbesondere auch der Impulsformer und Verstärker 26, rasch stromlos werden. Diesem Zweck dient unter anderem die Diode 7, welche eine Speisung des Kreises 26 aus dem Kondensator 8 nach dem Ausschalten des Schalters 6 verhindert.Der Kondensator 9 wird über den Transistor 19 und den Widerstand 25 rasch entladen.

Eine wesentliche Bedingung besteht darin, dass die Induktivität 13 stets in einem praktisch linearen Bereich ihrer Kennlinie und jedenfalls nicht im Sättigungsbereich betrieben wird. Es ist dies eine wesentliche Voraussetzung für einen sicheren Betrieb in einem weiten Bereich von Betriebsspannungen.

## Patentansprüche

1. Verfahren zur Erzeugung einer stabilen Gleichspannung, wobei ein Gleichstrom durch eine Induktivität (13) und einen dazu in Serie geschalteten, geregelten Schalttransistor (14) geführt wird, dadurch gekennzeichnet, dass in der Induktivität ein mittels eines Stromdiskriminators geregelter, im Mittel konstanter Gleichstrom erzeugt wird dessen Aenderungen durch eine Freilaufdiode (18) gering gehalten werden, und dass der Gleichstrom durch eine Zenerdiodenschaltung (12) geführt wird, an welcher die stabile Gleichspannung auftritt.

2. Verfahren nach Anspruch 1, dadurch gekennzeichnet, dass die Induktivität innerhalb eines praktisch linearen Bereichs ihrer Charakteristik betrieben wird.

3. Stabile Gleichspannungsquelle zur Durchführung des Verfahrens des Anspruchs 1 mit einer Induktivität (13), die mit einem steuerbaren Schaltelement (14) in Serie geschaltet ist, dadurch gekennzeichnet, dass der Strom in der Induktivität (13) mittels eines Stromdiskriminators (11, 16, 19 - 25) und des steuerbaren Schaltelementes (14) auf einen konstanten Mittelwert geregelt ist, dass der Strom eine Zenerdiodenschaltung (12) durchfliesst an welcher ein stabilisierter Spannungsabfall auftritt und welcher der Verbraucher (30 - 32) parallelgeschaltet ist, und dass eine Freilaufdiode (18) der Serieschaltung von Induktiviät (13) und Zenderdiodenschaltung (12) parallelgeschaltet ist.

4. Gleichspannungsquelle nach Anspruch 3, dadurch gekennzeichnet, dass der Stromdiskriminator einen Impulsformer und Verstärker (19 - 25) aufweist.

5. Gleichspannungsquelle nach Anspruch 3 oder 4, dadurch gekennzeichnet, dass zur Energieversorgung am Eingang ein Doppelweggleichrichter (5) angeordnet ist, der für Netzspannung bemessen ist.

6. Gleichspannungsquelle nach einem der Ansprüche 3 - 5, dadurch gekennzeichnet, dass die Stromversorgung für die Induktivität (13) von der Stromversorgung für den Impulsformer (19 -2 5) getrennt über eine Diode (7) erfolgt.

## Claims

1. Method for generating a stabilised DC voltage wherein a direct-current is passed through an inductivity (13) and a controlled switching transistor (14) connected in series thereto, characterised by the fact that a direct-current regulated by means of a current discriminator and constant on average is produced in the inductivity, the changes of the current being kept at a low level by means of a recovery diode (18), and that the direct-current is passed through a zener diode circuit (12) where the stabilised DC voltage appears.

2. Method according to claim 1, characterised by the fact that the inductivity is operated within a substantially linear range of its characteristic.

3. Stable DC voltage source (1) for carrying out the method of claim 1, comprising an inductivity (13) being connected in series with a controllable switching element (14), characterised by the fact that the current is regulated in the inductivity (13) by means of a current discriminator (11, 16, 19 - 25) and of the controllable switching element (14) to a constant average value, that the current traverses a zener diode circuit (12) where a stabilised voltage drop occurs and to which the current consumer (30 - 33) is connected in parallel, and that a recovery diode (18) is connected in parallel to the series connection of inductivity (13) and zener diode circuit (12).

4. DC voltage source according to claim 3, characterised by the fact that the current discriminator comprises a pulse former and amplifier (19 - 25).

5. DC voltage source according to claim 3 or 4, characterised by the fact that a full-wave rectifier (5) which is designed for mains voltage is disposed for energy supply at the input.

6. DC voltage source according to any one of claims 3 to 5, characterised by the fact that the energy supply of the inductivity (13) is separated from the energy supply of the pulse former (19 - 25) and is effected by a diode (7).

## Revendications

1. Procédé pour générer une tension continue stabilisée dans lequel un courant continu est conduit à travers une inductivité (13) et un transistor de commutation commandé (14) connecté en série, caractérisé en ce qu'un courant continu réglé au moyen d'un discriminateur de courant et étant constant en moyenne est engendré dans l'inductivité, courant dont les changements sont tenus faibles au moyen d'une diode de roue libre (18), et que le courant continu est passé par un circuit de diode Zener (12) où apparaît la tension continue stable.

2. Procédé selon la revendication 1, caractérisé en ce que l'inductivité est opérée dans une gamme pratiquement linéaire de sa caractéristique.

3. Source de tension continue stable (1), comprenant une inductivité (13) étant connectée en série avec un élément de commutation commandé (14), caractérisée en ce que le courant dans l'inductivité est réglé à une valeur moyenne au moyen d'un discriminateur de courant (11, 16, 19 - 25) et de l'élément de commutation commandé (14), que le courant passe par un circuit de diode Zener (12) où il se produit une chute de tension stabilisée et auquel le consommateur (30 - 32) est connecté en parrallèle, et qu'une diode de roue libre (18) est connectée en parallèle au montage en série de l'inductivité (13) et du circuit de diode Zener (12).

4. Source de tension continue selon la revendication 3, caractérisée en ce que le discriminateur de courant comprend un formateur des impulsions et amplificateur (19 - 25).

5. Source de tension continue selon la revendication 3 ou 4, caractérisée en ce que un redresseur à deux alternances (5) est disposé à l'entrée pour l'alimentation en énergie qui est dimensionné pour la tension du réseau.

6. Source de tension continue selon l'une quelconque des revendications 3 à 5, caractérisée en ce que l'alimentation en énergie de l'inductivité (13) est séparée de celui du formateur d'impulsions (19 - 25) et est effectuée par une diode (7).
